# EUROPÄISCHE PATENTSCHRIFT

(11) **EP 2 458 189 B1**
(45) Veröffentlichungstag und Bekanntmachung des Hinweises auf die Patenterteilung: **27.08.2014**
(21) Anmeldenummer: 11189136.2
(22) Anmeldetag: 15.11.2011
(51) Int. Cl.: F02M 31/06, F02M 31/14, F02M 35/10, F02B 63/02

(54) **Motorarbeitsgerät mit umschaltbarer Sommer-Winter-Betriebsfunktion**
Motorised work device with switchable summer-winter operating function
Appareil de travail à moteur doté d'une fonction été-hiver commutable

(30) Priorität: 30.11.2010 DE 202010016016 U
(43) Veröffentlichungstag der Anmeldung: 30.05.2012
(73) Patentinhaber: Makita Corporation, Anjo, Aichi 446-8502 (JP)
(72) Erfinder: Ewald, Jörg, 22085 Hamburg (DE)
(74) Vertreter: Richter Werdermann Gerbaulet Hofmann

(56) Entgegenhaltungen:
- EP-A1- 2 186 608
- DE-A1-102009 008 055
- US-A- 4 273 564
- US-A- 4 773 365
- US-A1- 2003 183 208

## Beschreibung

Die vorliegende Erfindung betrifft ein Motorarbeitsgerät wie eine Kettensäge, ein Handschleifgerät, eine Handkreissäge, einen Rasenmäher, einen Rasentrimmer oder ein sonstiges Handwerkzeug oder Gerät zur Garten- und Landschaftspflege, aufweisend einen Verbrennungsmotor mit wenigstens einem Zylinder und wenigstens einem Vergaser, der in einem Vergaserraum angeordnet ist, der durch eine Zwischenwand von einem Motorraum getrennt ist, wobei ein Lüfterrad vorgesehen ist, durch das Luft aus dem Motorraum durch eine Motorraumöffnung in der Zwischenwand in den Vergaserraum einbringbar ist.

### STAND DER TECHNIK

Druckschrift DE 10 2009 008 055 zeigt ein gattungsbildendes Motorarbeitsgerät mit einem Verbrennungsmotor in einem Motorraum und mit einem Vergaser in einem Vergaserraum, wobei der Motorraum und der Vergaserraum durch eine Zwischenwand voneinander getrennt sind. In einer Motorraumöffnung in der Zwischenwand ist ein Verschlusselement vorgesehen, das derart ausgestaltet ist, dass unterschiedliche Anteile an Kühlluft entweder am Zylinder vorbeigeleitet oder direkt in den Vergaserraum geleitet werden können. Dadurch ist der unmittelbare Übertritt der erwärmten Luft in den Vergaserraum möglich, wobei das Verschlusselement derart gestaltet ist, dass in einer wählbaren Position die Kühlluft in einen Teilluftstrom zum Vergaser und einen Teilluftstrom zur Beaufschlagung von Kühlrippen geteilt wird. Auf diese Weise kann sowohl eine ausreichende Erwärmung des Vergasers als auch eine ausreichende Kühlung des Zylinders auf der dem Lüfterrad abgewandten Seite erreicht werden. Jedoch entsteht der Nachteil, dass eine Umlenkung der Luft über den Zylinder zwar möglich ist, diese jedoch nicht als erwärmte Luft in den Vergaserraum eingebracht werden kann, um den Vergaser mit erwärmter Luft bei niedrigen Außentemperaturen zu betreiben. Zwar kann mit dem Verschlusselement der Anteil an Luft, der zur Kühlung über den Zylinder geleitet wird, variiert werden, jedoch ist beispielsweise nicht die Möglichkeit gegeben, mit dem Verschlusselement eine starke Kühlung des Zylinders bei gleichzeitiger Zufuhr von Kaltluft in den Vergaserraum vorzusehen, beispielsweise für den Sommerbetrieb des Motorarbeitsgerätes bei hohen Außentemperaturen.

Aus der US 2003/0183208 A1 ist ein Motorarbeitsgerät mit einem Verbrennungsmotor bekannt, der einen Zylinder und einen Vergaser aufweist, wobei der Vergaser in einem Vergaserraum angeordnet ist. Der Vergaserraum ist durch eine Zwischenwand von einem Motorraum getrennt, wobei ein Lüfterrad vorgesehen ist, durch das Luft aus dem Motorraum durch eine Motorraumöffnung in der Zwischenwand in den Vergaserraum eingebracht wird. In einem Kühlluftleitblech ist ein Schutter vorgesehen, mit dem eine in das Kühlluftleitblech eingebrachte Warmluftöffnung dann geöffnet werden kann, wenn niedrige Temperaturen vorherrschen und die Gefahr der Vergaservereisung besteht. Ein Verschließen einer Motorraumöffnung für eine Zufuhr von kalter Luft an den Vergaser, etwa für den Sommerbetrieb, ist nicht offenbart.

Die US 4,773,365 A zeigt ein weiteres Motorarbeitsgerät mit einem Verbrennungsmotor, der einen Zylinder und einen Vergaser aufweist, wobei der Verbrennungsmotor in einem Motorraum und der Vergaser in einem Vergaserraum angeordnet ist. Um für den Sommerbetrieb den Vergaser mit Kaltluft zu versorgen, wird ein erster Schutter geschlossen und ein zweiter vom ersten Schutter unabhängig ausgeführter und angeordneter Schutter wird geöffnet. Für einen Winterbetrieb muss der Vergaser mit Warmluft versorgt werden, und der erste Schutter wird geöffnet und der zweite Schutter wird geschlossen. Dadurch entsteht ein umständlich zu bedienendes Schuttersystem, das zudem kompliziert und mit einer Vielzahl von Einzelteiten ausgeführt ist.

Es ist daher die Aufgabe der vorliegenden Erfindung, ein Motorarbeitsgerät mit einer verbesserten umschaltbaren Sommer-Winter-Betriebsfunktion zu schaffen. Insbesondere ist die Aufgabe der vorliegenden Erfindung, ein Element zum Umschalten des Sommer-Winter-Betriebes weiter zu vereinfachen.

Diese Aufgabe wird ausgehend von einem Motorarbeitsgerät gemäß dem Oberbegriff des Anspruches 1 in Verbindung mit den kennzeichnenden

Merkmalen gelöst. Vorteilhafte Weiterbildungen der Erfindung sind in den abhängigen Ansprüchen angegeben.

### OFFENBARUNG DER ERFINDUNG

Die Erfindung schließt die technische Lehre ein, dass zusätzlich zur Motorraumöffnung eine Warmluftöffnung in der Zwischenwand vorgesehen ist, durch die über den Zylinder erwärmte Luft in den Vergaserraum einbringbar ist, und wobei ein als Schiebeelement ausgebildetes Stellelement vorgesehen ist, das in eine Sommerstellung bringbar ist, in der die Motorraumöffnung geöffnet und die Warmluftöffnung geschlossen ist und das in eine Winterstellung bringbar ist, in der die Motorraumöffnung geschlossen und die Warmluftöffnung geöffnet ist, wobei das Stellelement zwischen der Sommerstellung und der Winterstellung hin- und her bewegbar ist.

Ausgehend von einem Motorarbeitsgerät, das eine Motorraumöffnung im unteren Bereich der Zwischenwand aufweist, um nicht oder nur geringfügig erwärmte Luft vom unteren Motorraum in den Vergaserraum zu überführen, die folglich nicht durch den Zylinder erwärmt wurde, ist erfindungsgemäß vorgesehen, dass zusätzlich zur Motorraumöffnung eine getrennt von dieser angeordnete Warmluftöffnung in der Zwischenwand vorgesehen ist. Durch die Warmluftöffnung kann wahlweise Luft in den Vergaserraum geleitet werden, die wärmer ist als die Luft, die über die Motorraumöffnung in den Vergaserraum geleitet werden kann. Die Luft, die über die Warmluftöffnung durch die Zwischenwand in den Vergaserraum eingebracht wird, wird zunächst über den Zylinder des Motors erwärmt, und weist folglich eine hohe Temperatur auf. Um eine Umschaltung der Luftströmung in den Vergaserraum entweder durch die Motorraumöffnung oder durch die Warmluftöffnung zu schaffen, sieht die Erfindung ferner ein Stellelement vor, das in eine Sommerstellung bringbar ist, in

der die Motorraumöffnung geöffnet und die Warmluftöffnung geschlossen ist und das ferner in eine Winterstellung bringbar ist, in der die Motorraumöffnung geschlossen und die Warmluftöffnung geöffnet ist, um den Vergaserraum mit Luft hoher Temperatur zu speisen.

Das Motorarbeitsgerät kann gemäß einer vorteilhaften Ausführungsform eine Staubvorabscheidung aufweisen, die wenigstens mit der Motorraumöffnung verbunden ist. Die Motorraumöffnung durchbricht dabei die Zwischenwand vorzugsweise im unteren Bereich des Vergaserraumes und kann auf der Höhe eines Kurbelgehäuses des Verbrennungsmotors in den unteren, dem Zylinder abgewandten Bereich des Motorraums münden. Die über die Motorraumöffnung in den Vergaserraum eintretende Luft erwärmt sich daher vor Eintritt in den Vergaserraum nicht wesentlich.

Erfindungsgemäß ist das Stellelement als Schiebeelement ausgebildet, das zwischen der Sommerstellung und der Winterstellung vorzugsweise linear hin- und her bewegbar ist. Die Hin- und Herbewegung kann zwischen der Sommerstellung und der Winterstellung erfolgen, sodass eine der Öffnungen geschlossen wird, während die andere Öffnung geöffnet wird, wodurch eine wählbare Belüftung des Vergaserraums entweder mit kalter oder mit warmer Luft aus dem Motorraum geschaffen wird.

Nach einer möglichen weiteren Ausführungsform kann das Stelleiement als Blechbauteil ausgebildet sein und einen ersten Abschnitt aufweisen, der zum Verschließen der Motorraumöffnung ausgebildet ist und das Blechbauteil kann einen zweiten Abschnitt aufweisen, der zum Verschließen der Warmluftöffnung ausgebildet ist. Das Stellelement ist in seiner geometrischen Abmessung derart beschaffen, dass die mit einem bestimmten Abstand voneinander in die Zwischenwand eingebrachten Öffnungen mit einem einzelnen Stellelement verschließbar und öffenbar sind. Insbesondere kann das Stellelement eine U-förmige Gestalt aufweisen, wobei ein erster Schenkel der U-Form den ersten Abschnitt und ein zweiter Schenkel der U-Form den zweiten Abschnitt bildet und wobei der Vergaser in der U-Form eingefasst ist. Somit können sich auch die Motorraumöffnung und die Warmluftöffnung auf verschiedenen Seiten des

Vergasers befinden, der die Zwischenwand ebenfalls durchstößt, um den Vergaser mit dem Lufteinfass des Verbrennungsmotors zu verbinden. Alternativ kön-nen die Motorraumöffnung und die Warmluftöffnung nebeneinander gelegen in der Zwischenwand angeordnet sein, und das Stellelement kann als rechteckige Platte ausgebildet sein und die Öffnungen wechselweise verschließen bzw. freigeben.

Die Zwischenwand zwischen dem Motorraum und dem Vergaserraum kann eine wenigstens abschnittsweise plane Erstreckung aufweisen, wobei das Stellelement planparallel und vorzugsweise sogar wenigstens teilweise angrenzend an die Zwischenwand angeordnet ist. Der Vergaser kann ebenfalls auf der Zwischenwand angeordnet sein, und die Motorraumöffnung ist auf der ersten Seite des Vergasers und die Warmluftöffnung ist auf der der ersten Seite der gegenüberliegenden zweiten Seite des Vergasers angeordnet. Die erste Seite kann eine Lüfterradseite und die zweite, gegenüberliegende Seite kann eine Abtriebsseite des Verbrennungsmotors sein. Das U-förmige Stellelement kann gemäß einer vorteilhaften Ausführungsform folglich den Vergaser umgreifen, und gleitet bei der Hin- und Herbewegung zwischen der Sommerstellung und der Winterstellung auf der Zwischenwand wenigstens abschnittsweise ab.

Vorteilhafterweise sind Führungselemente vorgesehen, die zur Führung der linearen Bewegung des Stellelementes dienen, wobei die Führungselemente vorzugsweise in oder an der Zwischenwand angeordnet sind. Die Führungselemente können als Nutenführungen ausgestaltet sein, und am Stellelement sind Führungsschlitze eingebracht, in die die Führungselemente eingreifen, die insbesondere am Randbereich der Zwischenwand angeordnet sind. Die Sommerstellung und die Winterstellung bilden dabei Endstellungen der Bewegung des Stellelementes, und in den Endstellungen ist jeweils die Warmluftöffnung geschlossen während die Motorraumöffnung und damit die Vorabscheidung geöffnet oder die Motorraumöffnung bzw. die Vorabscheidung ist geschlossen, während die Warmluftöffnung geöffnet ist.

Vorteilhafterweise kann das Stellelement eine Handhabe aufweisen, über die das Stellelement manuell betätigt werden kann. Der Vergaserraum kann wenigstens teilweise durch zumindest ein Deckelelement derart luftdicht ausgebildet sein, dass ein Lufteintritt in den Vergaserraum auf einen Lufteintritt durch die Motorraumöffnung oder durch die Warmluftöffnung begrenzt ist. Soll das Stellelement zwischen der Sommerstellung und der Winterstellung verschoben werden, so kann das Deckelelement des Vergaserraums abgenommen werden, um an die Handhabe des Stellelementes zu gelangen.

Nach einer weiterführenden vorteilhaften Ausführungsform des Motorarbeitsgerätes kann eine Zündkerze im Bereich des oberen Teils des Zylinders vorgesehen sein, wobei die Warmluftöffnung im Bereich der Zündkerze, bevorzugt im Bereich 10 mm oberhalb des oberen Totpunktes eines im Zylinder geführten Kolbens und besonders bevorzugt im Bereich von oberseitig am Zylinder angeordneten Kühlrippen angeordnet ist. Damit wird eine besonders vorteilhafte Belüftung des Vergaserraums mit Warmluft ermöglicht, da im genannten Bereich ein besonders hoher Staudruck zwischen dem oberen Teil des Zylinders und einen den Zylinder umhüllenden Gehäuse vorherrscht. Durch den hohen Staudruck auf der Motorraumseite der Zwischenwand wird ein besonders starker Luftstrom durch die Warmluftöffnung in den Vergaserraum ermöglicht.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1 einen Ausschnitt eines Ausführungsbeispiels eines Motorarbeitsgerätes in einer quergeschnittenen Ansicht mit den Merkmalen der vorliegenden Erfindung,
Figur 2 eine Ansicht eines Motors für ein Motorarbeitsgerät mit einem Stellelement gemäß der vorliegenden Erfindung, welches sich in der Sommerstellung befindet,
Figur 3 eine Ansicht eines Motors für ein Motorarbeitsgerät mit einem Stellelement gemäß der vorliegenden Erfindung, welches sich in der Winterstellung befindet,
Figur 4 eine perspektivische Ansicht eines Vergaserraumgehäuses zur Bildung des Vergaserraums mit einer Motorraumöffnung und einer Warmluftöffnung sowie einem erfindungsgemäßen Stellelement und
Figur 5 eine quergeschnittene Seitenansicht der Anordnung eines Stellelementes gemäß einem Ausführungsbeispiel der vorliegenden Erfindung.

### BEVORZUGTES AUSFÜHRUNGSBEISPIEL DER ERFINDUNG

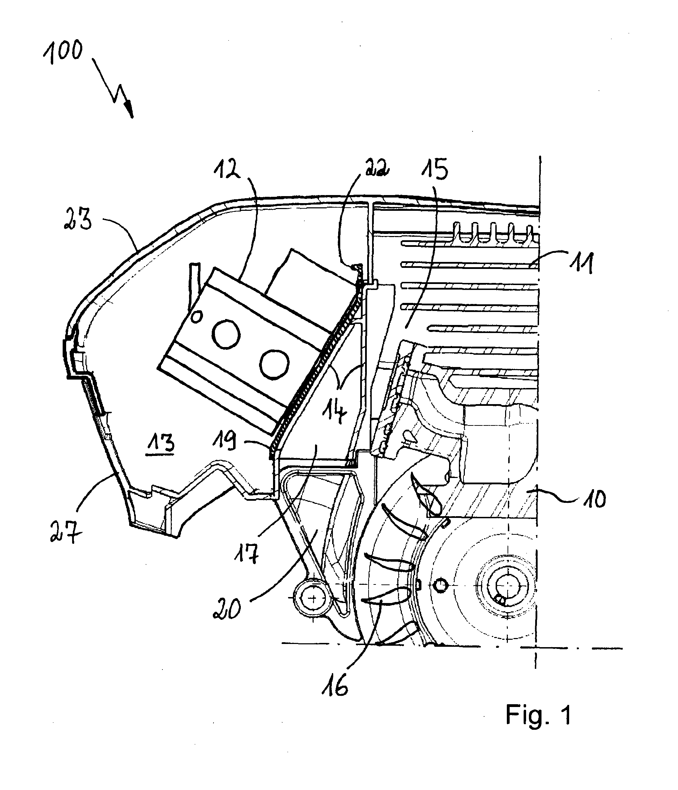

Figur 1 zeigt einen Ausschnitt eines Ausführungsbeispiels eines erfindungsgemäßen Motorarbeitsgerätes 100 in einer quergeschnittenen Ansicht. Das Motorarbeitsgerät 100 kann als Kettensäge, als Handschleifgerät, als Handkreissäge, als Rasenmäher, als Rasentrimmer oder als sonstiges Handwerkzeug oder Gerät zur Garten- und Landschaftspflege ausgeführt sein und einen Verbrennungsmotor 10 mit einem Zylinder 11 aufweisen. Zum Betrieb des Verbrennungsmotors 10 ist ein Vergaser 12 vorgesehen, und der Verbrennungsmotor 10 ist in einem Motorraum 15 und der Vergaser 12 ist in einem Vergaserraum 13 angeordnet. Zwischen dem Vergaserraum 13 und dem Motorraum 15 erstreckt sich eine Zwischenwand 14. Zum Betrieb des Verbrennungsmotors 10 wird durch den Vergaser 12 Verbrennungsluft angesaugt, die aus dem Vergaserraum 13 entnommen wird. Damit Luft vom Motorraum 15 in den Vergaserraum 13 gelangen kann, ist in der Zwischenwand 14 eine Motorraumöffnung 17 eingebracht, und über ein Lüfterrad 16 geförderte Luft wird durch die Motorraumöffnung 17 in den Vergaserraum 13 befördert, wodurch im Vergaserraum 13 ein leichter Überdruck entsteht.

Angrenzend an die Zwischenwand 14 ist ein Stellelement 19 schraffiert gezeigt, welches in eine Sommerstellung bringbar ist, in der die Motorraumöffnung 17 geöffnet und eine Warmluftöffnung (nicht näher gezeigt) geschlossen ist, wobei das Stellelement 19 ferner in eine Winterstellung bringbar ist, in der die Motorraumöffnung 17 geschlossen und die Warmluftöffnung geöffnet ist. Das Stellelement 19 ist als Blechbauteil ausgestaltet und planparallel zur Zwischenwand 14 an dieser angeordnet. Oberseitig besitzt das Stellelement 19 eine Handhabe 22, und wenn ein den Vergaserraum 13 wenigstens teilweise bildendes Deckelelement 23 abgenommen wird, kann das Stellelement 19 zwischen der Sommerstellung und der Winterstellung mittels manueller Bedienung der Handhabe 22 verschoben werden.

Ferner ist eine Staubvorabscheidung 20 teilweise dargestellt, welche wenigstens mit der Motorraumöffnung 17 verbunden ist. Durch die Staubvorabscheidung 20 kann die wenigstens durch die Motorraumöffnung 17 in den Vergaserraum 13 gelangende Luft gereinigt werden, wobei die Motorraumöffnung 17 angrenzend an die Staubvorabscheidung 20 angeordnet ist. Durch das Lüfterrad 16 wird eine Luftströmung durch die Staubvorabscheidung 20 hindurch erzeugt, und die Luft kann ohne stärkere Erwärmung von der Motorraumöffnung 17 in den Vergaserraum 13 gelangen. Wird durch das Stellelement 19 die Motorraumöffnung 17 in der Sommerstellung freigegeben, so gelangt nicht oder nur geringfügig erwärmte Luft vom Motorraum 15 in den Vergaserraum 13. Wird das Stellelement 19 in die Winterstellung gebracht, so wird die Motorraumöffnung 17 geschlossen, und die vom Lüfterrad 16 geförderte Luft kann am Zylinder 11 des Verbrennungsmotors 10 vorbeiströmen und über die (nicht näher gezeigte) Warmluftöffnung in den Vergaserraum 13 gefördert werden.

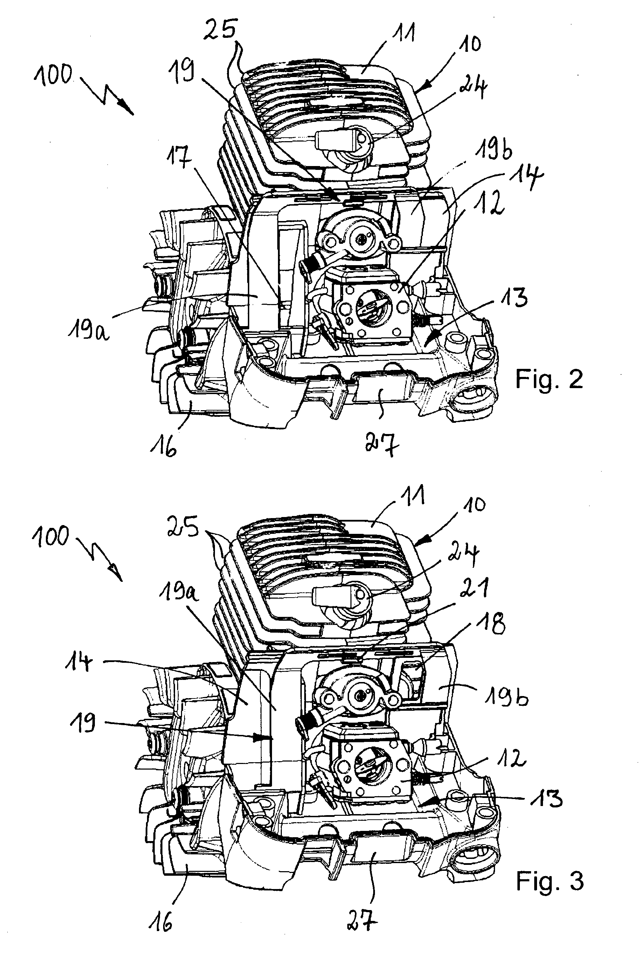

Die Figuren 2 und 3 zeigen das Motorarbeitsgerät 100 in teilweiser Darstellung des Verbrennungsmotors 10 mit dem Zylinder 11. In Figur 2 ist das Motorarbeitsgerät 100 mit einem erfindungsgemäßen Stellelement 19 gezeigt, welches in der Sommerstellung angeordnet ist, während das Stellelement 19 in Figur 3 in der Winterstellung gezeigt ist. In der Sommerstellung des Stellelementes 19 ist die Motorraumöffnung 17 freigegeben, während die Warmluftöffnung 18 erschlossen ist. Hingegen ist in der Winterstellung des Motorarbeitsgerätes 100 die Motorraumöffnung 17 verschlossen und die Warmluftöffnung 18 geöffnet.

Zur Bildung des Vergaserraums 13 ist ein Vergaserraumgehäuse 27 gezeigt, welches angrenzend an den Verbrennungsmotor 10 angeordnet ist und zur Aufnahme des Vergasers 12 dient. Die Zwischenwand 14 zur Trennung des Motorraumes vom Vergaserraum 13 ist als Bestandteil des Vergaserraumgehäuses 27 ausgeführt, und auf der Zwischenwand 14 ist das Stellelement 19 beweglich geführt aufgenommen.

Zur wechselweisen Öffnung und Schließung der Motorraumöffnung 17 und der Warmluftöffnung 18 ist das Stellelement 19 mit einem ersten Abschnitt 19a und einem zweiten Abschnitt 19b ausgestaltet. Das Stellelement 19 ist beispielhaft als Blechbauteil ausgeführt und U-förmig ausgeführt, wobei der Vergaser 12 im Vergaserraum 13 durch die U-Form des Stellelementes 19 eingefasst ist. Dabei befindet sich die Warmluftöffnung 18 auf einer ersten Seite des Vergasers 12 und die Motorraumöffnung 17 befindet sich auf einer der ersten Seite des Vergasers 12 gegenüberliegenden zweiten Seite des Vergasers 12. Damit wird ermöglicht, dass durch ein Hin- und Herschieben des Stellelementes 19 die Motorraumöffnung 17 und die Warmluftöffnung 18 wechselweise geöffnet und geschlossen wird.

Zur Führung des Stellelementes 19 ist ein Führungselement 21 vorgesehen, welches das Stellelement 19 auf der oberen Seite führt. Ferner ist gezeigt, dass die Warmluftöffnung 18 im Bereich der Zündkerze 24 des Zylinders 11 angeordnet ist, und die Luft, die zunächst den Zylinder 11 umströmt, kann durch diesen erwärmt werden und durch die Warmluftöffnung 18 in den Vergaserraum 13 gelangen. Zur Erwärmung der den Zylinder 11 umströmenden Luft weist dieser Kühlrippen 25 auf, und die Warmluftöffnung 18 ist mit besonderem Vorteil im Bereich der Zündkerze 24 in der Zwischenwand 14 angeordnet.

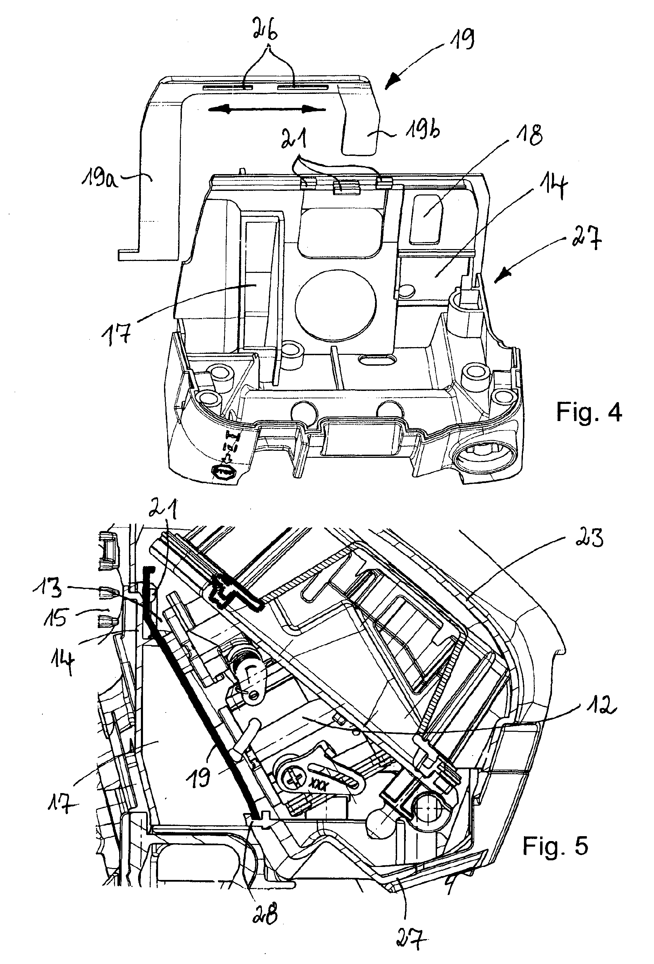

Figur 4 zeigt eine perspektivische Ansicht des Vergaserraumgehäuses 27 und des Stellelementes 19. Das Stellelement 19 ist mit einem ersten Abschnitt 19a und einem zweiten Abschnitt 19b gezeigt, und der erste Abschnitt 19a dient zum Verschließen der Motorraumöffnung 17, und der zweite Abschnitt 19b des Stellelementes 19 dient zum Verschließen der Warmluftöffnung 18. Oberseitig am Vergaserraumgehäuse 27 sind Führungselemente 21 angeordnet, die das Stellelement 19 im Bereich zwischen den Abschnitten 19a und 19b umschließen beziehungsweise in Führungsschlitze 26 eingreifen, die in das Stellelement 19 eingebracht sind. Wird das Stellelement 19 montiert, so gelangt dieses an der Zwischenwand 14 zur Anlage, und kann zwischen einer Sommerstellung und einer Winterstellung in gezeigter Pfeilrichtung hin- und herbewegt werden.

Figur 5 zeigt schließlich eine quergeschnittene Ansicht der Anordnung des Stellelementes 19 im Vergaserraumgehäuse 27, welches durch ein oberseitiges Deckelelement 23 verschlossen ist, um einen luftdichten Vergaserraum 13 zur Aufnahme des Vergasers 12 zu schaffen. Das Stellelement 19 ist angrenzend an die Motorraumöffnung 17 angeordnet, die in Form eines Zufuhrkanals mit großer Öffnung gezeigt ist. Zur Aufnahme des Stellelementes 19 sind oberseitig Führungselemente 21 vorgesehen, wobei auf der unteren Seite eine Führungsaufnahme 28 vorgesehen ist, die als Führungsnut ausgestaltet ist. Ferner ist die Zwischenwand 14 als Bestandteil des Vergaserraumgehäuses 27 gezeigt, die den Vergaserraum 13 vom Motorraum 15 trennt. Das Stellelement 19 ist als Blechbauteil ausgeführt und weist eine erhöhte Nachgiebigkeit auf, sodass das Stellelement 19 elastisch verbogen werden kann, um zwischen dem Führungselement 21 und der Führungsaufnahme 28 eingesetzt zu werden. Federt das Stellelement 19 nach Rücknahme der Montagekraft elastisch zurück, so kann sich dieses mit leichter Vorspannung zwischen dem Führungselement 21 und der Führungsaufnahme 28 verspannen, um schiebebeweglich und angrenzend an die Zwischenwand 14 aufgenommen zu werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktive Einzelheiten und räumliche Anordnungen können sowohl für sich als auch in den verschiedensten Kombinationen erfindungswesentlich sein.

### BEZUGSZEICHENLISTE

- 100: Motorarbeitsgerät
- 10: Verbrennungsmotor
- 11: Zylinder
- 12: Vergaser
- 13: Vergaserraum
- 14: Zwischenwand
- 15: Motorraum
- 16: Lüfterrad
- 17: Motorraumöffnung
- 18: Warmluftöffnung
- 19: Stellelement
- 19a: erster Abschnitt
- 19b: zweiter Abschnitt
- 20: Staubvorabscheidung
- 21: Führungselement
- 22: Handhabe
- 23: Deckelelement
- 24: Zündkerze
- 25: Kühlrippe
- 26: Führungsschlitz
- 27: Vergaserraumgehäuse
- 28: Führungsaufnahme

## Patentansprüche

1. Motorarbeitsgerät (100) wie eine Kettensäge, ein Handschleifgerät, eine Handkreissäge, ein Rasenmäher, ein Rasentrimmer oder ein sonstiges Handwerkzeug oder Gerät zur Garten- und Landschaftspflege, aufweisend einen Verbrennungsmotor (10) mit wenigstens einem Zylinder (11) und wenigstens einem Vergaser (12), der in einem Vergaserraum (13) angeordnet ist, der durch eine Zwischenwand (14) von einem Motorraum (15) getrennt ist, wobei ein Lüfterrad (16) vorgesehen ist, durch das Luft aus dem Motorraum (15) durch eine Motorraumöffnung (17) in der Zwischenwand (14) in den Vergaserraum (13) einbringbar ist, wobei zusätzlich zur Motorraumöffnung (17) eine Warmluftöffnung (18) in der Zwischenwand (14) vorgesehen ist, durch die über den Zylinder (11) erwärmte Luft in den Vergaserraum (13) einbringbar ist, **dadurch gekennzeichnet, dass** ein als Schiebeelement ausgebildetes Stellelement (19) vorgesehen ist, das in eine Sommerstellung bringbar ist, in der die Motorraumöffnung (17) geöffnet und die Warmluftöffnung (18) geschlossen ist und das in eine Winterstellung bringbar ist, in der die Motorraumöffnung (17) geschlossen und die Warmluftöffnung (18) geöffnet ist, wobei das Stellelement (19) zwischen der Sommerstellung und der Winterstellung hin- und her bewegbar ist.

2. Motorarbeitsgerät nach Anspruch 1, **dadurch gekennzeichnet, dass** eine Staubvorabscheidung (20) vorgesehen und wenigstens mit der Motorraumöffnung (17) verbunden ist und wobei die Motorraumöffnung (17) vorzugsweise im unteren Beriech des Vergaserraumes (13) die Zwischenwand (14) durchbricht und auf der Höhe eines Kurbelgehäuses des Verbrennungsmotors (10) in den unteren, dem Zylinder (11) abgewandten Bereich des Motorraums (15) mündet.

3. Motorarbeitsgerät nach Anspruch 2, **dadurch gekennzeichnet, dass** die Staubvorabscheidung (20) mit der Warmluftöffnung (18) verbunden ist, wobei im Luftstrom zwischen der Staubvorabscheidung (20) und der Warmluftöffnung (18) der Zylinder (11) angeordnet ist.

4. Motorarbeitsgerät nach einem der vorgenannten Ansprüche, **dadurch gekennzeichnet, dass** das Stellelement (19) als Blechbauteil ausgebildet ist und einen ersten Abschnitt (19a) aufweist, der zum Verschließen der Motorraumöffnung (17) ausgebildet ist und einen zweiten Abschnitt (19b) aufweist, der zum Verschließen der Warmluftöffnung (18) ausgebildet ist.

5. Motorarbeitsgerät nach einem der vorgenannten Ansprüche, **dadurch gekennzeichnet, dass** die Zwischenwand (14) eine wenigstens abschnittsweise plane Erstreckung aufweist, wobei das Stellelement (19) planparallel und vorzugsweise angrenzend an die Zwischenwand (14) angeordnet ist.

6. Motorarbeitsgerät nach einem der vorgenannten Ansprüche, **dadurch gekennzeichnet, dass** die Motorraumöffnung (17) auf einer ersten Seite des Vergasers (12) und die Warmluftöffnung (18) auf einer der ersten Seite gegenüberliegenden zweiten Seite des Vergasers (12) angeordnet ist.

7. Motorarbeitsgerät nach einem der vorgenannten Ansprüche, **dadurch gekennzeichnet, dass** das Stellelement (19) eine U-förmige Gestalt aufweist, wobei ein erster Schenkel der U-Form den ersten Abschnitt (19a) und ein zweiter Schenkel der U-Form den zweiten Abschnitt (19b) bildet und dass der Vergaser (12) in der U-Form eingefasst angeordnet ist.

8. Motorarbeitsgerät nach einem der vorgenannten Ansprüche, **dadurch gekennzeichnet, dass** Führungselemente (21) vorgesehen sind, die zur Führung der linearen Bewegung des Stellelementes (19) dienen, wobei die Führungselemente (21) vorzugsweise in oder an der Zwischenwand (14) angeordnet sind.

9. Motorarbeitsgerät nach einem der vorgenannten Ansprüche, **dadurch gekennzeichnet, dass** eine Handhabe (22) am Stellelement (19) angeformt ist, welches zur manuellen Betätigung des Stellelementes (19) dient.

10. Motorarbeitsgerät nach einem der vorgenannten Ansprüche, **dadurch gekennzeichnet, dass** der Vergaserraum (13) wenigstens teilweise durch zumindest ein Deckelement (23) derart ausgebildet ist, dass ein Lufteintritt in den Vergaserraum (13) auf einen Lufteintritt durch die Motorraumöffnung (17) oder durch die Warmluftöffnung (18) begrenzt ist.

11. Motorarbeitsgerät nach einem der vorgenannten Ansprüche, **dadurch gekennzeichnet, dass** eine Zündkerze (24) im Bereich des oberen Teils des Zylinders (11) vorgesehen ist, wobei die Warmluftöffnung (18) im Bereich der Zündkerze (24), bevorzugt im Bereich 10mm oberhalb des oberen Totpunktes eines im Zylinder (11) geführten Kolbens und besonders bevorzugt im Bereich von oberseitig am Zylinder (11) angeordneten Kühlrippen (25) angeordnet ist.

## Claims

1. A power implement (100) such as a chain saw, a hand-held grinder, a hand-held circular saw, a lawn mower, a lawn-edge trimmer, or another hand-held tool or device for garden and landscape maintenance, comprising an internal combustion engine (10) with at least one cylinder (11) and at least one carburetor (12) that is arranged in a carburetor space (13) which is separated by a partition wall (14) from an engine space (15), wherein a fan impeller (16) is provided through which air from the engine space (15) can be introduced into the carburetor space (13) through an engine space opening (17) in the partition wall (14), wherein a hot air opening (18) is provided in the partition wall (14) in addition to the engine space opening (17) through which air heated by the cylinder (11) can be introduced into the carburetor space (13), **characterized in that** a control element (19) designed as a sliding element is provided that can be brought into a summer position in which the engine space opening (17) is open and the hot air opening (18) is closed, and that can be brought into a winter position in which the engine space opening (17) is closed and the hot air opening (18) is open, wherein the control element (19) can be moved back and forth between the summer position and the winter position.

2. The power implement according to claim 1, **characterized in that** a dust pre-separator (20) is provided and at least connected to the engine space opening (17), and wherein the engine space opening (17) preferably pierces the partition wall (14) in the bottom area of the carburetor space (13) and runs into the lower area of the engine space (15) facing away from the cylinder (11) at the level of the crankcase of the internal combustion engine (10).

3. The power implement according to claim 2, **characterized in that** the dust separator (20) is connected to the hot air opening (18), wherein the cylinder (11) is arranged in the air stream between the dust pre-separator (20) and the hot air opening (18).

4. The power implement according to any one of the preceding claims, **characterized in that** the control element (19) is designed as a sheet-metal component comprising a first section (19a) designed to close the engine space opening (17) and comprising a second section (19b) designed to close the hot air opening (18).

5. The power implement according to any one of the preceding claims, **characterized in that** the partition wall (14) comprises an at least partially planar extension, wherein the control element (19) is arranged plane-parallel and preferably adjacent to the partition wall (14).

6. The power implement according to any one of the preceding claims, **characterized in that** the engine space opening (17) is arranged on a first side of the carburetor (12) and the hot air opening (18) is arranged on a second side of the carburetor (12) that is opposite to its first side.

7. The power implement according to any one of the preceding claims, **characterized in that** the control element (19) has a U-shape, wherein a first leg of said U-shape forms the section (19a) and a second leg of said U-shape forms the second section (19b), and **in that** the carburetor (12) is arranged such that it is encompassed by said U-shape.

8. The power implement according to any one of the preceding claims, **characterized in that** guide elements (21) are provided that are used for guiding the linear movement of the control element (19), wherein said guide elements (21) are preferably arranged in or on the partition wall (14).

9. The power implement according to any one of the preceding claims, **characterized in that** a handle (22) is molded onto the control element (19) which is used for manual operation of the control element (19).

10. The power implement according to any one of the preceding claims, **characterized in that** the carburetor space (13) is at least partially, by at least one cover element (23), designed such that air intake into the carburetor space (13) is restricted either to air intake through the engine space opening (17) or to air intake through the hot air opening (18).

11. The power implement according to any one of the preceding claims, **characterized in that** a spark plug (24) is provided in the upper part of the cylinder (11), wherein the hot air opening (18) is arranged in the area of the spark plug (24), preferably in the area 10mm above the upper dead center of a piston guided in the cylinder (11), particularly preferred in the area of cooling fins (25) arranged on the top side of the cylinder (11).

## Revendications

1. Appareil de travail à moteur (100) tel que tronçonneuse, meuleuse portative, scie circulaire manuelle, tondeuse à gazon, coupe-bordures ou autre outil manuel ou appareil d'entretien des jardins et du paysage, présentant un moteur à combustion (10) avec au moins un cylindre (11) et au moins un carburateur (12) qui est disposé dans un compartiment de carburateur (13) qui est séparé d'un compartiment de moteur (15) par une paroi intermédiaire (14), une roue de ventilateur (16) étant prévue au moyen de laquelle l'air provenant du compartiment de moteur (15) peut être introduit dans le compartiment de carburateur (13) à travers une ouverture de compartiment de moteur (17) dans la paroi intermédiaire (14), une ouverture d'air chaud (18) étant prévue dans la paroi intermédiaire (14) en plus de l'ouverture de compartiment de moteur (17) pour introduire dans le compartiment de carburateur (13) de l'air réchauffé par le biais du cylindre (11), **caractérisé en ce qu'**il est prévu un élément d'actionnement (19), constitué en tant qu'élément coulissant, qui peut être amené dans une position été dans laquelle l'ouverture de compartiment de moteur (17) est ouverte et l'ouverture d'air chaud (18) est fermée, et qui peut être amené dans une position hiver dans laquelle l'ouverture de compartiment de moteur (17) est fermée et l'ouverture d'air chaud (18) est ouverte, l'élément d'actionnement (19) pouvant être déplacé dans un mouvement de va-et-vient entre la position été et la position hiver.

2. Appareil de travail à moteur selon la revendication 1, **caractérisé en ce qu'**il est prévu une séparation préalable des poussières (20) qui est raccordée au moins à l'ouverture de compartiment de moteur (17), et l'ouverture de compartiment de moteur (17) traversant de préférence la paroi intermédiaire (14) dans la zone inférieure du compartiment de carburateur (13) et débouchant à la hauteur d'un carter de vilebrequin du moteur à combustion (10) dans la zone du compartiment de moteur (15) inférieure qui est éloignée du cylindre (11).

3. Appareil de travail à moteur selon la revendication 2, **caractérisé en ce que** la séparation préalable des poussières (20) est raccordée à l'ouverture d'air chaud (18), le cylindre (11) étant disposé entre la séparation préalable des poussières (20) et l'ouverture d'air chaud (18).

4. Appareil de travail à moteur selon une des revendications précitées, **caractérisé en ce que** l'élément d'actionnement (19) est constitué en tant que composant en tôle et présente un premier tronçon (19a) qui est constitué pour la fermeture de l'ouverture de compartiment de moteur (17), et un deuxième tronçon (19b) qui est constitué pour la fermeture de l'ouverture d'air chaud (18).

5. Appareil de travail à moteur selon une des revendications précitées, **caractérisé en ce que** la paroi intermédiaire (14) présente une étendue plane au moins par tronçons, l'élément d'actionnement (19) étant disposé de façon plane et parallèle et de préférence de façon adjacente à la paroi intermédiaire (14).

6. Appareil de travail à moteur selon une des revendications précitées, **caractérisé en ce que** l'ouverture de compartiment de moteur (17) est disposée sur un premier côté du carburateur (12), et l'ouverture d'air chaud (18) est disposée sur un deuxième côté du carburateur (12) opposé au premier côté.

7. Appareil de travail à moteur selon une des revendications précitées, **caractérisé en ce que** l'élément d'actionnement (19) présente une forme en U, une première branche de la forme en U formant le premier tronçon (19a), et une deuxième branche de la forme en U formant le deuxième tronçon (19b), et **en ce que** le carburateur (12) est disposé de façon bordée dans la forme en U.

8. Appareil de travail à moteur selon une des revendications précitées, **caractérisé en ce qu'**il est prévu des éléments de guidage (21) qui servent à guider le mouvement linéaire de l'élément d'actionnement (19), les éléments de guidage (21) étant disposés de préférence dans ou sur la paroi intermédiaire (14).

9. Appareil de travail à moteur selon une des revendications précitées, **caractérisé en ce qu'**une manette (22) est formée sur l'élément d'actionnement (19), qui sert à l'actionnement manuel de l'élément d'actionnement (19).

10. Appareil de travail à moteur selon une des revendications précitées, **caractérisé en ce que** le compartiment de carburateur (13) est, au moins partiellement, constitué d'au moins un élément de couvercle (23) de telle sorte qu'une entrée d'air dans le compartiment de carburateur (13) est limitée à une entrée d'air à travers l'ouverture de compartiment de moteur (17) ou à travers l'ouverture d'air chaud (18).

11. Appareil de travail à moteur selon une des revendications précitées, **caractérisé en ce qu'**il est prévu une bougie d'allumage (24) dans la zone de la partie supérieure du cylindre (11), l'ouverture d'air chaud (18) étant disposée dans la zone de la bougie d'allumage (24), de préférence dans la zone à 10 mm au-dessus du point mort haut d'un piston guidé dans le cylindre (11) et, de façon particulièrement préférée, dans la zone d'ailettes de refroidissement (25) disposées côté supérieur sur le cylindre (11).
